# EUROPEAN PATENT APPLICATION

(11) **EP 4 321 013 A1**
(43) Date of publication of application: **14.02.2024**
(21) Application number: 23187094.0
(22) Date of filing: 21.07.2023
(51) Int. Cl.: A01G 9/22

(54) **MULTIFUNCTIONAL COVERING UNIT FOR AGRICULTURAL AREAS, MOUNTING KIT AND MULTIFUNCTIONAL COVERING FOR AGRICULTURAL AREAS**

(30) Priority: 08.08.2022 IT 202200016962
(71) Applicant: Tendarredo S.r.l., 26845 Codogno (LO) (IT)
(72) Inventor: CAZZAMALI, Cesco, 26845 CODOGNO (LODI) (IT)
(74) Representative: Zermani Biondi Orsi, Umberto

(57) **Abstract**

Multifunctional covering unit (100), replicable an indefinite number of times creating a covering for areas "A" of varying sizes.

The unit (100) is provided with a pair of uprights (3), a pair of beams (4) each connected to a respective upright (3) and at least one rainwater collection channel (15) arranged transversely between the uprights (3).

The unit (100) also comprises a waterproof and darkening sheet (6) configured to be stretched out and retracted along the beams (4) and at least one solar panel (5) and/or wind blade (7).

The unit (100) is multifunctional, i.e. it integrates the threefold function of covering an underlying agricultural area (A) by means of the sheet (6), of producing renewable power energy by means of at least one solar panel (5) and/or by means of the wind blade (7), and of collecting rainwater, and possibly reusing it for irrigation, by means of the channel (15).

## Description

The present invention relates to a multifunctional unit for covering agricultural areas of varying sizes.

The present invention also relates to a multifunctional unit, replicable an indefinite number of times, to cover agricultural areas of varying sizes. The present invention also relates to a kit for mounting the aforesaid multifunctional unit.

Finally, the present invention relates to a multifunctional covering for areas of land, consisting in the repetition of a plurality of the aforesaid units.

In other words, the present invention falls into the agriculture field, and more specifically into the field of covering areas of land intended for cultivation.

Generally, structures consisting of at least two pairs of uprights arranged according to a quadrangular plan and supporting at least one covering sheet are used to cover agricultural areas of varying size.

More in detail, the aforementioned sheet is waterproof and darkening, thus being useful in the event of rainfall to prevent a flooding of the underlying area, and, in the event of sunny conditions, to shade the underlying agricultural area.

In addition, a covering for agricultural areas generally comprises in an upper portion thereof at least one solar panel configured to generate sustainable power energy.

In this context, document EP3462841 describes a system for covering agricultural areas consisting of two side gantry-like structures and two sheets arranged transversely between the side structures.

In more detail, the side gantry-like structures each consist of a pair of uprights, arranged parallel to each other, and a pair of arms arranged in an "inverted V" shape between the uprights.

The side structures, by means of the pair of "inverted V-shaped" arms, define pairs of pitches on which protective nets or waterproof sheets can be placed, which, in the open position, cover the area underlying the covering system and which, in the closed position, are compact and piled up between the uprights.

In order to create a covering for an agricultural area larger in size than the plan dimensions of the system described in EP3462841, it is necessary to position a plurality of identical systems so that they are adjacent to each other.

Disadvantageously, such a positioning is time-consuming to install and even more disadvantageously, it does not ensure fully covering the area underlying the aforementioned plurality of systems, more specifically the area underlying the adjacent portions of two adjacent systems.

It is thus not possible to efficiently cover the land area portion between two adjacent systems.

In addition, in the event of rainfall, the waterproof sheets, if in an open position, are arranged in pitches and shelter the area of land underlying the system by channelling rainwater into an area adjacent thereto, disadvantageously causing possible flooding.

Disadvantageously, the system shown in EP3462841 is neither rigid nor capable of withstanding stresses caused, for example, by atmospheric events such as gusts of wind.

The system shown in EP3462841 is therefore not efficient in bad weather conditions such as rainfalls or gusts of wind.

Even more disadvantageously, the system shown in the above-mentioned document does not provide any kind of upright and/or arm configuration to facilitate an operator in the step of mounting the system itself.

Lastly, the system described in the above-mentioned document does not provide any support means suitable to prevent the sheet from yielding downwards, i.e. towards the area of land underlying the system, and consequently damaging the sheet itself.

In this context, the technical task at the basis of the present invention is to propose a multifunctional unit for covering agricultural areas of varying sizes and a mounting kit thereof that overcomes at least some of the drawbacks of the prior art mentioned above.

The object of the present invention is also to propose a multifunctional covering for areas of land comprising a plurality of units that overcomes at least some of the drawbacks of the prior art mentioned above.

In particular, the object of the present invention is to propose a unit to create a covering for agricultural areas that is replicable an indefinite number of times by defining a multifunctional covering capable of ensuring an integral covering of the area underlying the above-mentioned plurality of units.

The object of the present invention is to propose a multifunctional unit, i.e. a unit capable of shading and sheltering an underlying agricultural area from rainfall, and capable of producing renewable power energy and collecting rainwater.

The object of the present invention is also to propose a unit to create a covering for agricultural areas that is efficient in bad weather conditions such as rainfalls or gusts of wind.

In addition to this, the object of the present invention is to propose a unit for covering agricultural areas and a kit for creating it that has features such as to ease an operator in the mounting step.

Finally, the object of the present invention is to propose a unit for covering agricultural areas comprising movable sheets which, when in an open configuration, are stretched out without downward yielding effects.

The technical task and the specified objects are essentially achieved by a multifunctional unit for creating an agricultural area covering of varying sizes, a kit for mounting it, and a multifunctional covering for agricultural areas comprising the technical features set forth in one or more of the attached claims.

In particular, according to an aspect of the present invention, the multifunctional covering unit can be replicated an indefinite number of times to cover agricultural areas of varying size.

Preferably, the unit comprises a central structure provided with a pair of uprights arranged parallel to each other, at least one cross-piece arranged transversely between the uprights and at least one rainwater collection channel arranged transversely between the uprights.

Preferably, the unit also comprises a pair of beams parallel to each other connected at one end to a respective upright and having a second end at a vertical height greater than the vertical height at which the aforementioned first end is located. Consequently, the beams define a sloping portion.

Preferably, the unit comprises at least one sheet configured to be stretched out and retracted along the beams in order to cover or uncover an agricultural area underlying the unit, even more preferably, the unit comprises handling means for stretching out and retracting the at least one sheet along the beams, and in particular along a sliding guide identified on the beams.

The collection channel is preferably arranged near the aforementioned sloping portion of the beams and is configured to collect the rainwater conveyed by the sheet.

Preferably, the unit also comprises a tank and pipes configured to transfer the rainwater collected from the channel to the tank.

In addition, pumping means and an irrigation device, preferably including sprayers, are provided to exploit the rainwater collected in the tank to irrigate an area underlying the unit by means of the aforementioned sprayers.

According to a further aspect of the present invention, the uprights, the cross-piece, the beams and the collection channel are rigidly connected to each other, in particular by means of form-fitting couplings and/or threaded members.

Preferably, the uprights, cross-piece, beams and collection channel are pre-configured to have predefined connecting portions corresponding to pre-determined assembly configurations.

According to a further aspect of the present invention, the unit comprises, for each upright, a connection element pre-shaped to be connected at least to the upright itself and to a respective beam.

Preferably, the unit comprises at least one solar panel and/or at least one wind blade useful for producing power energy useful at least for operating the handling means for the at least one sheet and/or control elements for handling the at least one sheet and the solar panels.

Preferably, the unit also comprises support elements for the at least one sheet, such as, for example, additional cross-pieces arranged transversely between the beams, configured to support the at least one sheet when stretched out between the pair of beams, counteracting a downwardly yielding effect thereof.

According to a further aspect of the present invention, the unit is multifunctional, i.e. it integrates the threefold function of covering agricultural areas underlying it by means of at least one sheet, of producing renewable power energy by means of solar panels and/or by means of wind blades, and of collecting rainwater by means of appropriate channels, and possibly reusing it for irrigation.

According to a further aspect of the present invention, the unit can be combined with other homologous units by defining a covering areas of land.

Further features and advantages of the present invention will be made clearer by the indicative, and therefore non-limiting, description of preferred but not exclusive embodiments of a multifunctional unit for covering agricultural areas of varying sizes, a mounting kit thereof, and a multifunctional covering for areas of land comprising a plurality of such units.

Such description will be set forth herein below with reference to the accompanying drawings, provided for merely indicative and therefore non-limiting purposes, wherein:
- Figure 1 shows a view of a first embodiment of a multifunctional unit for covering agricultural areas, subject-matter of the present invention, in which the sheet is stretched out;
- Figure 2 shows a view of a second embodiment of a multifunctional unit for covering agricultural areas, subject-matter of the present invention, in which the sheet is stretched out;
- Figure 3 shows a detail of a central structure of the unit, subject-matter of the present invention;
- Figure 4 shows handling means comprised in the unit, subject-matter of the present invention;
- Figure 5 shows a multifunctional covering for agricultural areas, subject-matter of the present invention, obtained by replicating a unit according to its first embodiment;
- Figure 6 shows a multifunctional covering for agricultural areas, subject-matter of the present invention, obtained by replicating a unit according to its second embodiment.

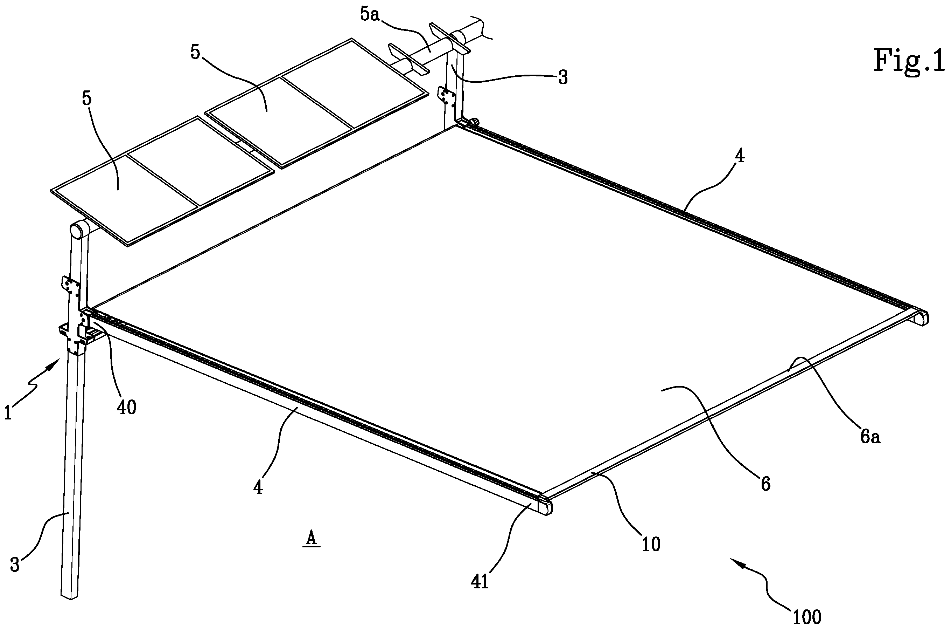

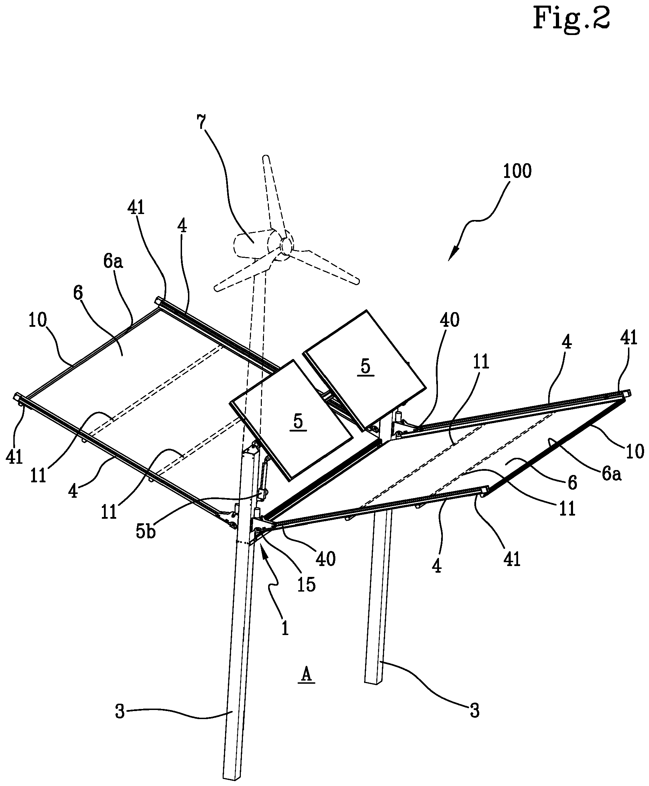

The multifunctional covering unit 100, subject-matter of the present invention, is shown in two embodiments in Figures 1 and 2, respectively. The object of the unit 100 is to cover a corresponding agricultural area "A" of variable size underlying it.

Referring to Figures 1-3, the unit 100 consists of a central structure 1 provided with a pair of uprights 3 arranged parallel to each other, preferably the uprights 3 are arranged in a vertical direction.

Preferably, the uprights 3 are defined by a single-piece body.

The central structure 1 also comprises at least one cross-piece 2 arranged transversely between the uprights 3 and at least one rainwater collection channel 15, also arranged transversely between the uprights 3. Preferably, the cross-piece 2 is mounted above the collection channel 15. In more detail, the collection channel 15 is a U-shaped profile, preferably made of metal, with an open upper portion.

Preferably, the central structure 1 is embedded or may be embedded into the ground in a lower portion thereof, in particular in a lower portion of the uprights 3, thereby at least partially delimiting an agricultural area "A" underlying the unit 100, subject matter of the present invention.

Even more preferably, a lower portion of the central structure 1, in particular a lower portion of the uprights 3, is supported by a concrete foundation.

In other words, the central structure 1 is composed of a pair of uprights 3, preferably vertical and even more preferably embedded into the ground in a lower portion thereof, by at least one cross-piece 2 and at least one collection channel 15 arranged in connection with the pair of uprights 3, preferably in an upper portion thereof.

The unit 100 also comprises at least one pair of beams 4 arranged parallel to each other.

In more detail, the at least one pair of beams 4 comprises beams 4 each departing from a respective upright 3 and comprise a first end 40, constrained to the respective upright 3 at a portion thereof above the collection channel 15.

In other words, the first end 40 of the beams 4 is positioned at a vertical height greater than the vertical height at which the collection channel 15 is mounted.

The second end 41 of the beams 4 is also located at a vertical height greater than the vertical height at which the aforementioned first end 40 is placed, thus defining at least a sloping portion of the beam 4.

In other words, each beam 4 is connected to a respective upright 3 so as to be arranged in a downward configuration towards the upright 3 itself, and towards the collection channel 15.

Preferably, the cross-pieces 2, uprights 3 and beams 4 are elongated elements with a quadrangular or circular solid or hollow cross-section and are made, for merely exemplary purposes, of wood, polymers or metal materials such as, for example, aluminium.

Preferably, the cross-pieces 2, uprights 3 and beams 4 are made of metal material.

The unit 100 further comprises at least one sheet 6 movable along the beams 4 so that it is stretched out or retracted to, respectively, cover or uncover the area "A" underlying the unit 100.

In other words, the sheet 6, when in a stretched out configuration, is arranged transversally between the beams 4, as shown in Figures 1 and 2. When in a retracted configuration, however, the sheet 6 is folded on itself (or gusseted).

In more detail, the cross-piece 2 is configured to support a first end of the sheet 6.

The cross-piece 2 is mounted at the first end 40 of the beams 4, i.e. at a vertical height higher than the vertical height at which the collection channel 15 is mounted, in other words, the cross-piece 2 and the sheet 6, at least partially supported by the cross-piece 2, are arranged above the channel 15.

In detail, the cross-piece 2 is mounted at the first end 40 of the beams 4 so as to allow the sheet 6 to be unwound correctly along them: when in the extended configuration, in fact, the sheet 6 is arranged transversally between the beams 4.

In an alternative embodiment (not shown), the cross-piece 2 is configured to be rotatable on itself and the sheet 6 can be unwound from the cross-piece 2 so as to be unwound, when in the extended configuration, from the cross-piece 2 and to be wound, when retracted, around the cross-piece 2. Preferably, the sheet 6 is darkening so as to allow, when stretched out along the beams 4, shading the area "A" underlying the unit 100.

The sheet 6 is also waterproof and the channel 15 is mounted between the pair of uprights 3 below the beams 4, which support the sheet 6 and are each constrained to a respective upright 3 so as to be descending towards the upright 3 itself.

As a result, a sloping portion of the beams 4 is facing the channel 15.

As a result, the sheet 6, when in a stretched out configuration between the beams 4, is sloping towards the channel 15, advantageously conveying rainwater towards it, thus assisting the rainwater collection function thereof.

Advantageously, therefore, the unit 100 allows to shadow the underlying area "A" and to assist a rainwater collection operated by the channel 15 by means of the sheet 6.

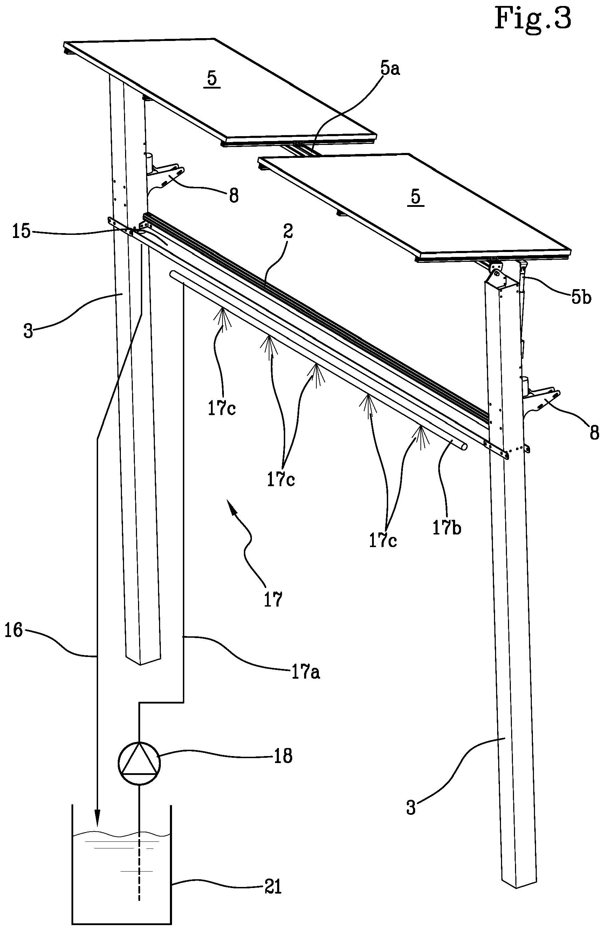

Referring to Figure 3, preferably, the unit 100 comprises a first pipe 16 connecting the channel 15 and a storage tank 21 configured to collect the water conveyed in the channel 15 itself.

Preferably, the channel 15 is tilted with respect to a horizontal plane and towards the pipe 16, so that the water contained therein is conveyed towards the pipe 16.

Preferably, the storage tank 21 is either underground or placed in a position adjacent to an upright 3.

Preferably, the pipe 16 extends adjacent and parallel to a respective upright 3.

Even more preferably, the unit 100 comprises pumping means 18, such as pumps, configured to extract water stored in the storage tank 21. Advantageously, therefore, the unit 100 allows rainwater to be collected by means of the channel 15, the pipe 16 and the tank 21 and transferred by the aforementioned pumping means 18.

Preferably the unit 100 comprises an irrigation device 17.

In particular, the irrigation device 17 is connected to the storage tank 21 and is configured to use the water extracted from the storage tank 21 for irrigating the area "A" underlying the unit 100.

Even more preferably, the irrigation device 17 comprises an extraction pipe 17a, an irrigation pipe 17b and nozzles, preferably, sprayers 17c. Preferably, the storage tank 21 is connected to the extraction pipe 17a, which comprises the aforementioned pumping means 18 and is placed in a position adjacent to a respective upright 3.

At one end thereof, the extraction pipe 17a is connected to the irrigation pipe 17b, which is positioned in a position below the collection channel 15. The irrigation pipe 17b is preferably connected to sprayers 17c or nozzles. With reference to Figures 1-3, the unit 100 also comprises sustainable energy generating means.

Preferably, the unit 100 comprises at least one solar panel 5, supported by a respective pair of uprights 3 of the central structure 1.

Preferably, the unit 100 comprises a frame 5a extending at least partially horizontally and arranged in an upper portion of the unit 100 itself. Preferably, the frame 5a is placed transversally and in connection with the uprights 3 of the central structure 1, preferably between top portions thereof.

Even more preferably, the frame 5a is configured to support at least one solar panel 5, preferably a plurality of solar panels 5.

The frame 5a is preferably at least partially movable, such a technical feature allows the at least one solar panel 5 to be moved during the day so that a surface of the panel is transverse to a direction of sunlight illumination, advantageously, it is therefore possible to maximise power energy production.

Even more preferably, the frame 5a can be moved by means of a motor 5b directly connected to a portion of the frame 5a itself.

Preferably, the solar panels 5 allow to produce power energy useful at least to move the frame 5a, and thus to actuate the motor 5b. Alternatively, or in combination with the foregoing, the unit 100 further comprises at least one wind blade 7 mounted in an upper portion of the unit 100.

For merely exemplary purposes, the wind blade 7 is mounted at the top portion of at least one upright 3.

Preferably, the wind blade 7 is mounted at the frame 5a, thus also being movable by means of the motor 5b; the movement of the solar panel 5 or wind blade 7 may, however, be different or require different axes, which can in any case be defined during the design step.

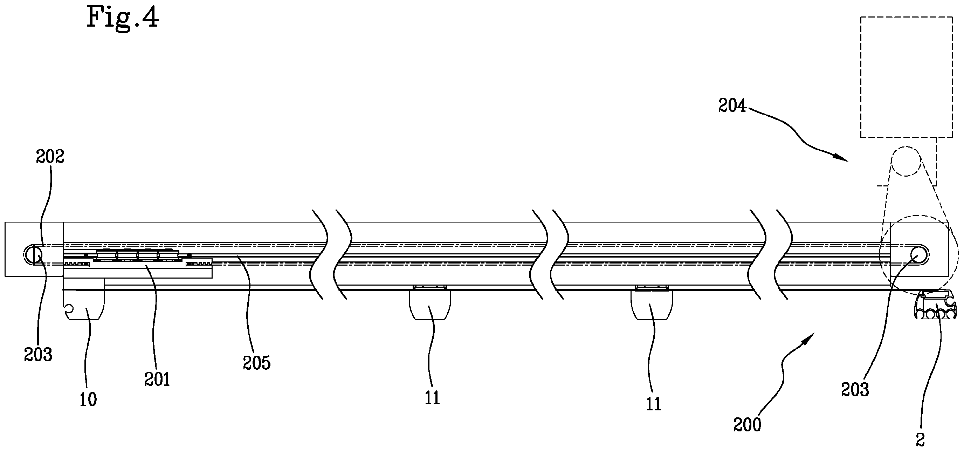

Even more preferably, the wind blade 7 allows to produce power energy useful at least to move the frame 5a, and thus to actuate the motor 5b. The unit 100 also comprises handling means 200, shown for merely exemplary purposes in Figure 4.

The handling means 200 are adapted to move the sheet 6 along the beams 4 so that it is stretched out or retracted to, respectively, cover or uncover the area "A" underlying the unit 100.

More in detail, the sheet 6 is integral with the cross-piece 2 at a first end side thereof and integral with an end piece 10, which can be moved by the handling means 200, at a second free end 6a.

In other words, the sheet 6 can be stretched out and retracted along the beams 4 by moving the end piece 10, carried out by the handling means 200.

The handling means 200 are arranged at each beam 4 of the pair of beams 4.

According to an embodiment, the handling means 200 comprise, for each beam 4, a carriage 201 operatively connected to a toothed belt 202, toothed pulleys 203 configured to support the belt 202 and an electric motor 204 operatively connected to and configured to move the belt 202. Preferably, the belt 202 has an annular shape and the pulleys 203 supporting it are arranged at the ends 40 and 41 of each beam 4.

In other words, the belt 202 extends along the length of the respective beam 4.

In more detail, each beam 4 comprises a groove defining a sliding guide 205 and the respective carriage 201 slides within the groove 205.

The carriage 201 is also integral with the end piece 10, thus, a movement of the belt 202 carried out by the motor 204 defines a movement of the end piece 10, and consequently defines a movement of the second free end 6a of the sheet 6 with respect to its first end integral with the cross-piece 2.

In other words, the sheet 6 is movable between a stretched out configuration wherein the end piece 10 is arranged at the second end 41 of the beams 4 and a retracted configuration wherein the end piece 10 is arranged at the first end 40 of the beams 4.

Preferably, the motor 204 is electrically driven and is powered by the power energy produced by the solar panel 5 and/or wind blade 7.

The sheet 6 can therefore be stretched out and retracted, i.e. moved, along the beams 4 by the handling means 200.

The movement of the sheet 6 by the handling means 200 is assisted by the sliding guide 205 defined within each beam 4.

In other words, the sheet 6 may be moved by the handling means 200 and the movement imposed on the sheet 6 is defined by the groove obtained in each beam 4, along which the sheet 6 may be stretched out and retracted.

Preferably, the unit 100 further comprises at least one further cross-piece 11 arranged transversely between the beams 4 in a portion between the first end 40 and the second end 41.

The cross-piece 11 is connected at its ends to a respective pair of idle carriages, slidably inserted within the respective sliding guide 205 made in each beam 4 of the pair of beams 4.

In other words, the aforementioned idle carriages slide within the sliding guide 205.

The cross-piece 11 is also integral with the portion of the sheet 6 and, being connected to the above-mentioned idle carriages, can be moved according to the movement of the end piece 10.

Thus, the sheet 6, when retracted, is folded in a "accordion-like" manner between the cross-piece 2, cross-piece 11 and end piece 10. Advantageously, the cross-piece 11 defines a lower support for the sheet 6 by counteracting a downward yielding effect thereof.

In an alternative embodiment (not shown), the cross-piece 2 is configured to rotate on itself allowing the sheet 6 to be wound and unwound and the handling means 200 comprise, for each beam 4, a carriage 201 operatively connected to a belt 202, a toothed pulley 203 configured to cooperatively support with the cross-piece 2 the belt 202, and an electric motor 204 configured to move the belt 202.

In other words, the handling means 200 generate a rotation of the cross-piece 2 and a consequent winding or unwinding of the sheet 6 around it.

Preferably, in the alternative embodiment, the belt 202 has an annular shape and is supported by the cross-piece 2 and the pulley 203, even more preferably, the pulley 203 is arranged at the second end 41 of the beam 4.

In other words, the belt 202 extends along the length of the respective beam 4.

Preferably, the cross-piece 2, in the alternative embodiment, comprises a preload spring configured to tension the sheet 6 as it stretches out along the beams 4 and to assist its retraction along the beams 4. Advantageously, this technical feature allows the sheet 6 to remain tensioned when arranged in a stretched-out configuration between the beams 4.

The unit 100 is modular: the aforementioned uprights 3, cross-piece 2, beams 4 and collection channel 15 are rigidly connected by means of form-fitting couplings or threaded members.

More in detail, the uprights 3 are rigidly connected to the beams 4 by means of threaded couplings.

It is also possible to create the aforementioned connection by means of a form-fitting coupling, for merely exemplary purposes, in this case, the upright 3 has, in an upper portion thereof, side projections (not shown) with a hollow section and defining a housing seat for a beam 4, configured to fit into the aforementioned receiving seat according to a form-fitting coupling with interference.

Advantageously, the aforementioned technical features make it easier for an operator to mount an upright 3 with a respective beam 4 as the assembly itself is pre-configured by the aforementioned threaded or form-fitting coupling.

Similarly, the uprights 3 are rigidly connected to the cross-piece 2 and collection channel 15 by means of a threaded coupling created between them.

Preferably, a threaded coupling between the collection channel 15 and the upright 3 is reinforced or can be reinforced by means of a metal bracket.

It is also possible to create the aforementioned connection by means of a form-fitting coupling, for merely exemplary purposes, in this case, the upright 3 has, preferably in an upper portion thereof, a first projection (not shown) defining a housing seat for a cross-piece 2, configured to fit into the aforesaid seat according to a form fitting with interference, and a second projection (not shown) defining a housing seat for the collection channel 15, configured to fit into the aforementioned seat according to a form-fitting coupling with interference.

Advantageously, the aforementioned technical features make it easier for an operator to assemble an upright 3 with a respective cross-piece 2 and a collection channel 15 as the assembly itself is preconfigured by the aforementioned threaded or form-fitting coupling.

The aforementioned uprights 3, cross-pieces 2, beams 4 and collection channel 15 are therefore preconfigured to have predefined connecting portions, i.e. the aforementioned housing seats (not shown) or holes to create threaded couplings.

In particular, the aforementioned housing seats and the aforementioned threaded couplings correspond to predetermined assembly configurations. Advantageously, such a technical feature facilitates an operator in the step of mounting the unit 100, avoiding waste of time caused by making connections between the parts: the unit 100, subject matter of the present invention, has predefined connecting portions, i.e., the aforementioned housing seats (not shown) or the holes for making threaded couplings.

In an embodiment, the unit 100 comprises for each upright 3 a connecting element 8.

In particular, the connecting element 8 is pre-shaped and is configured to be connected to a corresponding upright 3 and at least one respective beam 4.

Preferably, the connecting element 8 has at least one receiving seat configured to house a respective beam 4.

Even more preferably, the connecting element 8 is defined by two side plates, preferably L-shaped.

More in detail, the side plates are arranged parallel to each other and facing each other, furthermore, the plates are placed at a distance from each other at least equal to a dimension of a section of the beam 4 so as to define the aforementioned receiving seat, configured to house the beam 4.

In other words, the beam 4 can be inserted between the side plates.

In more detail, the beam 4 can be integrally connected to the connecting element 8 by means of threaded couplings, form-fitting couplings or by means of rivets, if the upright 3 and beam 4 have a hollow section. Similarly, the connecting element 8 can be stably connected to the upright 3 by means of threaded, form-fitting couplings, or by means of rivets, if the upright 3 has a hollow section.

The connecting element 8 is therefore useful for defining a pre-shaped connection with the upright 3 and the beam 4, advantageously ensuring a fast and effective assembly of the unit 100.

Advantageously, the technical features of the connecting element 8 are such that they facilitate an operator in the step of mounting the unit 100, avoiding waste of time caused by making connections between the parts. Preferably, the connecting element 8 is mounted in an upper portion of the upright 3.

The upright 3 is preferably connected with the cross-piece 2 and the collection channel 15 by welding, or by threaded connections.

Advantageously, therefore, the unit 100, subject matter of the present invention, has connecting portions predefined by the connecting element 8, or holes obtained in the upright 3, the channel 15 or the cross-piece 2 for creating threaded couplings.

The unit 100, subject matter of the present invention, can be made in two embodiments, shown respectively in Figures 1 and 2.

According to a first embodiment, shown in Figure 1, the central structure 1 is connected to a single pair of beams 4 in a rectilinear shape.

In particular, each beam 4 has an upward inclination with respect to a horizontal plane starting from its first end 40, connected to the corresponding upright 3.

According to the aforementioned first embodiment, the unit 100 comprises a single sheet 6 mounted on the central structure 1, in particular mounted transversally between the uprights 3 and at the pair of beams 4. According to a second embodiment, shown in Figure 2, the central structure 1 is connected to two pairs of beams 4 in a rectilinear shape by means of respective connecting elements 8.

In particular, the two pairs of beams 4 are mutually moving away from the central structure 1 so as to give the unit 100 a "Y" structure, and the unit 100 comprises a pair of connecting elements 8 for each upright, each configured to support a beam 4.

According to the aforementioned second embodiment, the unit 100 comprises a pair of sheets 6 and a respective pair of cross-pieces 2 mounted on the central structure 1, in particular mounted transversely between the uprights 3.

Each sheet 6 of the pair of sheets 6 may be stretched out and retracted along each pair of beams 4, of the "Y" structure of the unit 100.

The present invention also provides a kit for making the unit 100.

In detail, the kit provides at least:
- a pair of uprights 3;
- at least one cross-piece 2;
- at least one pair of beams 4;
- at least one sheet 6;
- handling means 200 for at least one sheet 6;
- at least one collection channel 15

Preferably, the kit also provides at least one connecting element 8 for each upright 3 and is configured to define a pre-shaped connection with at least one beam 4.

Preferably, the kit also comprises an end piece 10 and/or at least a cross-piece 11 for the sheet 6 in order to prevent it from yielding downwards. Preferably the kit comprises means for generating sustainable energy, such as at least one solar panel 5 and/or at least one wind blade 7, even more preferably a respective support frame 5a.

Preferably, the kit comprises a storage tank 21 and an associated connecting pipe 16.

Even more preferably, the kit comprises at least one irrigation device 17.

The unit 100 is also replicable an indefinite number of times, making it possible to advantageously cover even large agricultural areas or rows of vines: the present invention provides a multifunctional covering 300 for areas of land comprising a plurality of units 100 replicated in a two-dimensional sequence to continuously cover an area of land.

The covering 300 can be made in two embodiments, corresponding to the two embodiments of the unit 100.

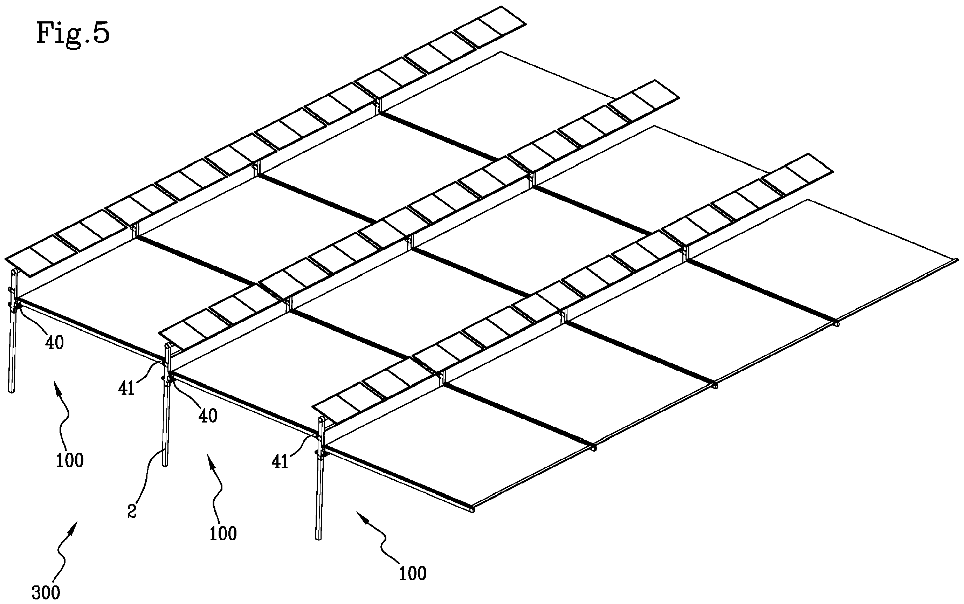

According to a covering 300 made by the repetition of units 100 according to the first embodiment, shown in Figure 5, the second end 41 of a beam 4 of a first unit 100 is directly connected to an upright 3 of an adjacent unit 100.

Preferably, the connection between a beam 4 of a first unit 100 and an upright 3 of an adjacent unit 100 is made by means of the connecting element 8.

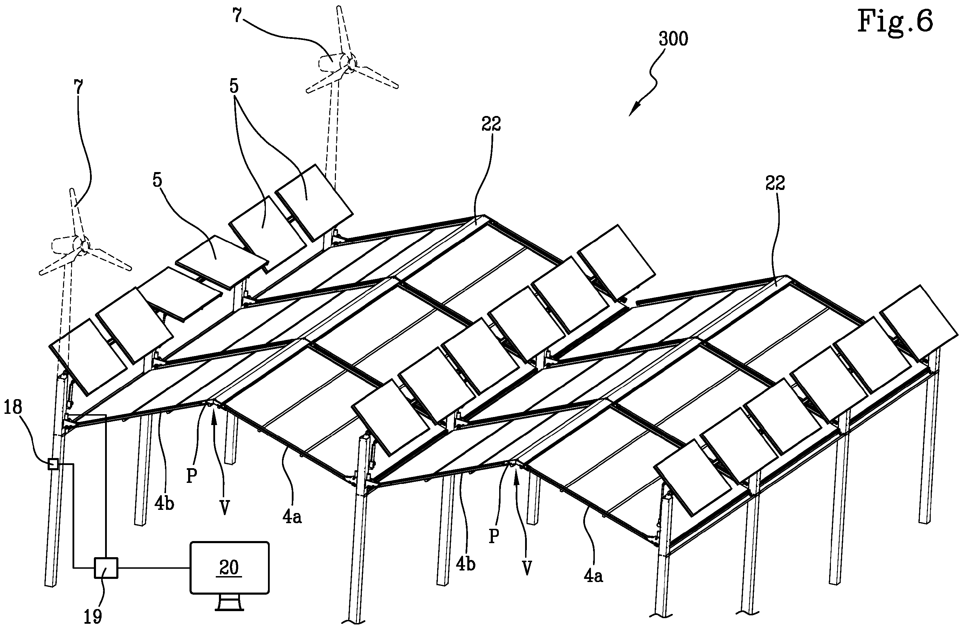

According to a covering 300 made by the repetitions of units 100 according to the second embodiment, shown in Figure 6, the second end 41 of a beam 4a of a first unit 100 is directly connected to a second end 41 of a beam 4b of an adjacent unit 100.

Two adjacent units 100 thereby define, by means of their beams 4a and 4b, an "inverted V-shaped" structure wherein the successive beams 4a and 4b are inclined and converging towards a top vertex "V".

The successive beams 4a and 4b of two adjacent units 100 are firmly connected, preferably by means of a connecting plate "P".

Preferably the connecting plate "P" is made of metal, shaped in an "inverted V" shape and is firmly connected to the beams 4a and 4b preferably by threaded couplings.

According to the second embodiment of the covering 300, it also comprises a covering profile 22 applied as a connection between the top vertices "V" identified by the beams 4a, 4b of the two adjacent units 100. Preferably the covering profile 22 is convex, such a technical feature advantageously allows rainwater to be conveyed sideways towards the pair of sheets 6.

The shape of the covering 300 according to the first and second embodiments of the unit 100 described above allows to define a rigid structure.

In other words, two adjacent units 100 define a gantry-like structure and the beams 4 are arranged to connect the uprights 3 of the two adjacent units 100.

The beams 4, arranged to connect two adjacent units 100, thereby define, in cooperation with the cross-piece 2 of the adjacent units 100, a transversal support, creating a self-supporting three-dimensional structure and therefore advantageously able to effectively withstand transversal stresses due, for example, to atmospheric events such as gusts of wind. A plurality of units 100, according to the first and second embodiments thereof, can also be connected so that each pair of adjacent units 100 shares at least one beam 4 and one upright 3.

The multifunctional covering 300 provides in both embodiments that a plurality of units 100 composing it, or a portion thereof, share a same pipe 16, a same storage tank 21, a same irrigation device 17.

According to both embodiments and with reference to Figures 5 and 6, the covering 300 further comprises at least one first sensor 18 configured to determine at least one atmospheric parameter.

In other words, the sensor 18 is configured to detect at least one atmospheric parameter, preferably related to a rainfall condition.

The sensor 18 is connected to a control unit 19, operatively connected to the handling means 200 to stretch out or retract the at least one sheet 6 depending on the atmospheric parameter detected.

Preferably the covering 300 comprises at least a second sensor configured to determine at least one atmospheric parameter.

In other words, the second sensor is configured to detect at least a second atmospheric parameter, preferably related to a sunlight condition and/or wind direction.

The second sensor is connected to the control unit 19, operatively connected to the solar panel 5, preferably to the motor 5b, and/or to the wind blade 7, to define a movement.

Preferably, the covering 300 further comprises a user interface 20 connected to the control unit 19 to allow manually actuating a controlled movement of the sheet 6 and/or of the solar panel 5, preferably of the support frame 5a, and/or wind blade 7.

Preferably, the solar panel 5 and/or the wind blade 7 provide energy useful for the operation of the first sensor 18, the second sensor, the control unit 19 and/or the user interface 20.

The sensor 18 is operatively connected to the control unit 19 by means of wiring or by means of wireless technology.

The control unit 19 is connected to the solar panel 5, preferably with the motor 5b, and/or with the handling means 200 and/or with the wind blade 7 by means of wiring or by means of wireless technology.

The user interface 20 is connected to the control unit 19 by means of wiring or by means of wireless technology.

The present invention achieves the proposed object, overcoming the drawbacks complained in the prior art.

The unit 100 can be connected to an adjacent unit 100 so as to achieve a structural continuity between them thanks to the connecting element 8 and, in its second embodiment, thanks to the connecting plate "P" to the connecting profile 22.

Advantageously, this technical feature makes it possible to define a covering for agricultural area ensuring an integral covering thereof. Furthermore, two adjacent units 100 define a covering 300 having at least one pair of beams 4 arranged parallel to each other and transversely between the uprights 3 of the central structures 1 of the two units 100. Advantageously, such a shape allows the covering 300 to withstand transverse stresses caused, for example, by gusts of wind.

The unit 100, subject matter of the present invention, thanks to the collection channel 15, the pipe 16 and the storage tank 21, has features such as to prevent possible flooding of an area adjacent to the area "A" underlying the unit 100 itself.

The channel 15, in fact, collects the rainwater conveyed by at least one sheet 6 and the pipe 16 allows to collect the water collected inside the tank 21.

Advantageously, the aforementioned technical features are such as to prevent any flooding of an area adjacent to the area "A" underlying the unit 100, as rainwater is collected in the tank 21 and not simply conveyed to an area adjacent to the area "A" underlying the unit 100.

In addition, the unit 100 has technical features that facilitate an operator in the step of mounting the system itself: predefined couplings corresponding to predetermined assembly configurations are indeed provided.

More in detail, the unit 100 comprises a connecting element 8 for each upright 3 useful for defining pre-shaped couplings between the upright 3 and at least one beam 4.

The unit 100 also allows to obtain a covering for agricultural areas capable of shading and sheltering from rainfall an underlying agricultural area, thanks to the waterproof and darkening sheet 6, of producing renewable power energy thanks to the solar panel 5 and/or thanks to the wind blade 7, and of collecting rainwater thanks to the collection channel 15, the pipe 16 and the tank 21.

The unit 100 also allows to exploit collected water through appropriate pumping means and irrigation device 17.

The unit 100 is also replicable an indefinite number of times, making it possible to obtain a multifunctional covering 300 for areas of land capable of displaying all the aforementioned advantages.

## Claims

1. A multifunctional covering unit (100), replicable an indefinite number of times to cover agricultural areas of varying size, comprising:
- a central structure (1) provided with a pair of uprights (3) arranged parallel to each other, at least one cross-piece (2) arranged transversely between the uprights (3) and at least one rainwater collection channel (15) arranged transversely between the uprights (3);
- a pair of parallel beams (4) each one departing from a respective upright (3) and extending from a first end (40), constrained to the respective upright (3), to a second end (41) placed at a vertical height greater than said first end (40), defining at least a sloping portion of the beam (4); said second end (41) of the beams (4) comprising means connecting the uprights (3) or the beams (4) of an additional, homologous multifunctional unit (100);
- at least one sheet (6), connected at one end thereof to said cross-piece (2) and configured to be stretched out and retracted along said beams (4) in order to cover or uncover an area (A) underlying said unit (100);
- handling means (200) for stretching out and retracting said at least one sheet (6) along the beams (4), wherein each beam (4) comprises at least one respective sliding guide (205) for the sheet (6).

2. The unit (100) according to claim 1, wherein said channel (15) is facing said sloping portion of said beams (4) so as to collect the rainwater conveyed by the respective sheet (6) when stretched along the beams (4).

3. The unit (100) according to claim 1 or 2, further comprising:
- a storage tank (21) configured to collect water;
- a pipe (16) connecting said collection channel (15) to a storage tank (21);
- pumping means connected to said storage tank (21) and configured to extract water stored therein;
- an irrigation device (17) connected to the storage tank (21) and configured to distribute the water extracted from the storage tank (21), preferably by means of one or more sprayers (17c),
wherein said irrigation device (17) is arranged at least partially on at least one cross-piece (2).

4. The unit (100) according to claim 1, wherein said uprights (3), said cross-piece (2) and said beams (4) are rigidly connected to each other, in particular by means of form-fitting couplings and/or threaded members.

5. The unit (100) according to claim 1 or 4, wherein said uprights (3), said cross-piece (2) and said beams (4) are pre-configured to have predefined connecting portions corresponding to predefined assembly configurations.

6. The unit (100) according to any one of the preceding claims, comprising, for each upright (3), a pre-shaped connecting element (8) to be connected to at least said upright (3) and to at least one beam (4), preferably said connecting element (8) having at least one receiving seat (9) for introducing a portion of said beam (4).

7. The unit (100) according to claim 6, wherein said upright (3) is connectable in a lower portion thereof to a basement that may be sunk in the ground and is configured to support at least one respective solar panel (5) and/or at least one respective wind blade (7).

8. The unit (100) according to any one of the preceding claims, wherein said handling means (200) are powered by power energy produced by means of said solar panel (5) and/or by means of said wind blade (7).

9. The unit (100) according to claim 8, wherein said handling means (200) comprise:
- at least one carriage (201), slidably mounted on a respective sliding guide (205) and fixed to a free end portion (6a) of said sheet (6);
- at least one handling belt (202) connected to the carriage (201) to move the carriage (201) in both directions along the sliding guide (205);
- a motor (204) configured to actuate the belt (202).

10. The unit (100) according to any one of the preceding claims comprising at least one further cross-piece (11) arranged transversely between the beams (4) and configured to define a support for the sheet (6) when arranged in a stretched out configuration by defining a lower support of the sheet (6) and counteracting a downwardly yielding effect of the sheet (6).

11. A multifunctional covering (300) of agricultural areas comprising a plurality of units (100) according to any one of the preceding claims, wherein each beam (4) of a unit (100) has a rectilinear shape, in particular with an upward inclination with respect to a horizontal plane starting from the respective first end (40), and has the second end (41) directly connected to an upright (3) of an adjacent unit (100), and wherein each unit (100) comprises a single sheet (6) which may be unwound from a roller (7) mounted on the respective central structure (1).

12. The multifunctional covering (300) of agricultural areas comprising a plurality of units (100) according to any one of claims 1 to 10, wherein each unit (100) comprises two pairs of beams (4) mutually moving away from the central structure (1) so as to give the unit (100) a "Y" structure, and wherein each unit (100) further comprises two sheets (6) each of which is stretchable and retractable along a respective pair of beams (4), said sheets (6) being connected at one end to a respective pair of cross-pieces (2) said covering providing that the second end (41) of each beam (4) is firmly connected to the second end (41) of a beam (4) of the adjacent unit (100) so as to define a structure with an "inverted V" shape wherein two successive beams (4) are inclined and converging towards a top vertex (V) in particular defined by two rectilinear beams (4a, 4b) firmly connected at said top vertex (V).

13. The multifunctional covering (300) according to claim 12, further comprising a covering profile (22) applied at the top vertex (V) and arranged to connect said beams (4a, 4b), preferably said covering profile (22) being convex in order to laterally convey the rainwater towards said sheets (6).

14. The multifunctional covering (300) according to any one of claims 11 to 13, comprising at least a first sensor (18) configured to determine at least an atmospheric parameter and a control unit (19) operatively connected to said first sensor (18) and to the handling means (200) for stretching out or retracting said at least one sheet (6) according to said detected atmospheric parameter, said unit (100) further comprising a user interface (20) connected to said control unit (19) for actuating a controlled movement of said at least one sheet (6), preferably said solar panel (5) and/or said wind blade (7) providing energy suitable for the operation of said first sensor (18), said control unit (19) and/or said user interface (20).

15. A kit for creating a unit (100) according to any one of the preceding claims 1 to 10, comprising:
- a pair of uprights (3);
- at least one cross-piece (2);
- at least one pair of beams (4);
- at least one sheet (6)
- handling means (200) for said at least one sheet (6);
- at least one collection channel (15),
wherein at least said uprights (3), cross-pieces (2), beams (4) have predefined connecting portions to make mutual connections and/or couplings according to predefined positions and/or geometries.
